Europäisches Patentamt

European Patent Office

Office européen des brevets

(19)

(11) Publication number: **0 200 236 B1**

# EUROPEAN PATENT SPECIFICATION

(45) Date of publication of patent specification: **10.07.91**  (51) Int. Cl.⁵: **H02K  15/095**

(21) Application number: **86200364.7**

(22) Date of filing: **10.03.86**

(54) Machine and method for forming windings on electric motor stators.

<table>
<tr><td>

(30) Priority: **02.04.85 IT 2018485**

(43) Date of publication of application:
**05.11.86 Bulletin  86/45**

(45) Publication of the grant of the patent:
**10.07.91 Bulletin  91/28**

(84) Designated Contracting States:
**CH DE FR GB LI SE**

(56) References cited:
**DE-A- 3 328 403**
**FR-A- 2 541 211**
**US-A- 4 612 702**

</td><td>

(73) Proprietor: **AXIS S.p.A.**

**I-55028 Tavarnelle val di pesa (Florence)(IT)**

(72) Inventor: **Luciani, Sabatino**
**Via di Querceto, 169**
**I-50019 Sesto Fiorentino (Firenze)(IT)**

(74) Representative: **Lotti, Giorgio**
**c/o Ing. Barzanò & Zanardo Milano S.p.A. Via**
**Cernaia 20**
**I-10122 Torino(IT)**

</td></tr>
</table>

## Description

The invention relates to a machine and a method for forming windings on electric motor stators.

Machines for forming stator windings are known in which a needle, driven with rectilinear reciprocating motion combined with reciprocating rotary motion about its axis, carries at least one copper wire unwinding from a reel in order to deposit it in the stator armature slot. The needle comprises one point if a single winding is to be made, or comprises two opposing points if both windings are to be made simultaneously, as shown in document FR-A-2514211. In all cases, the needle always has its axis of advancement and rotation coinciding with the stator axis in order to enable it to slide in the open spaces between the slots within the stator during its to-and-fro movement and to lie equidistant from all the armature slots on which its points are to wind the copper wire. Moreover, in the case of a stator with two opposing windings, winding forms, also known as shoes, are applied to the ends of the respective slots, and are shaped in such a manner as to accompany the copper wire of the needle into the slot, when the needle rotates external to the stator.

These shoes have a basic and specific purpose in that, as stated, the needle is coaxial to the stator axis and thus its point cannot pass beyond the winding retention tooth during its rotation which takes place beyond the inner diameter of the stator, so that, if the shoe is not used, the copper wire is unable to wind on to the slot beyond the retention tooth. If the retention tooth does not exist, only a few turns could be deposited, and these would represent only a small percentage of those required.

In addition to the need to construct these shoes accurately, they must also be properly sized for each stator to be constructed, even though they represent an element which forms no part of the final product. In this respect, the shoes are removed by two devices when the winding has been formed.

In addition, four tensioning devices have to be set up to hold the shoes rigidly against the stator during the forming stage, and to enable them to be rapidly released from it when the forming is complete.

The main object of the invention is to provide a machine for forming a stator winding which enables the use of winding forms or shoes to be dispensed with, together with their tensioning devices and the devices which release them from the stator.

A further object of the invention is to improve the winding which is formed about each slot by reducing the needle stroke and the loop which the wire makes external to the stator, by virtue of the elimination of the shoes, as determined by the main object of the invention.

These and further objects which will be more apparent hereinafter are attained according to the invention by a stator winding machine as claimed in claim 1 and by a method for forming a winding in electric motor stators as claimed in claim 7.

The subject of the invention is described hereinafter with reference to the accompanying drawings in which:

Fig. 1
is a perspective view of a stator and of the needle of the machine according to the invention shown in two of its movement stages;

Fig. 2
is a front view of a stator and of the needle of the machine according to the invention;

Fig. 3
is a diagrammatic axial section through a stator with, external to it, the needle of the machine according to the invention;

Fig. 4, 5 and 6
are schemes of three different forms of application of the machine according to the invention.

The drawings illustrate a two-winding stator of traditional type, comprising the hollow cylinder 10 constituted by high magnetic permeability laminations which, on the inside of the structure, assume two opposing dovetail configurations 11 which define the slots 12 in which the windings 13 are disposed.

On the front and rear face of the stator there are applied plastics sections 14 which reproduce its surface, to project at 15 from the dovetails 11 where they comprises a tooth 16 intended to form a frontal retainer for the winding 13 (non always essential).

The needle 17 is of the single point type 18 and, according to the invention, has its translation and rotation axis x eccentric to the stator centre y.

Again according to the invention, the axis x is at a distance a from the centre y, along the fictitious straight line z passing through the middle of the two opposing dovetails 11, such that the distance b between the axis x and the end 19 of the point 18 is greater than the distance c between the axis x and the end of that tooth 16 which is closest to said axis x.

To obtain this it is necessary only to move the stator 10 out of alignment with the needle 17, thus keeping the entire apparatus which determines the to-and-fro movement and rotary movement of the needle unchanged, and simply modifying the support for the stator so that this latter is no longer coaxial to the needle but is eccentric by the aforesaid distances, as shown on the drawings.

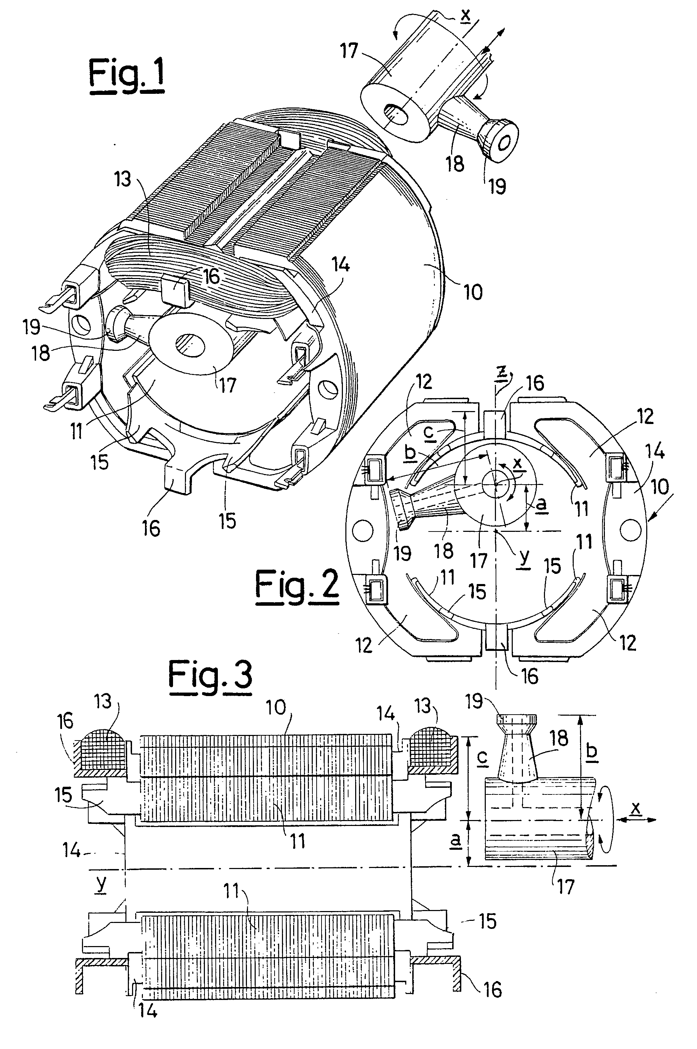

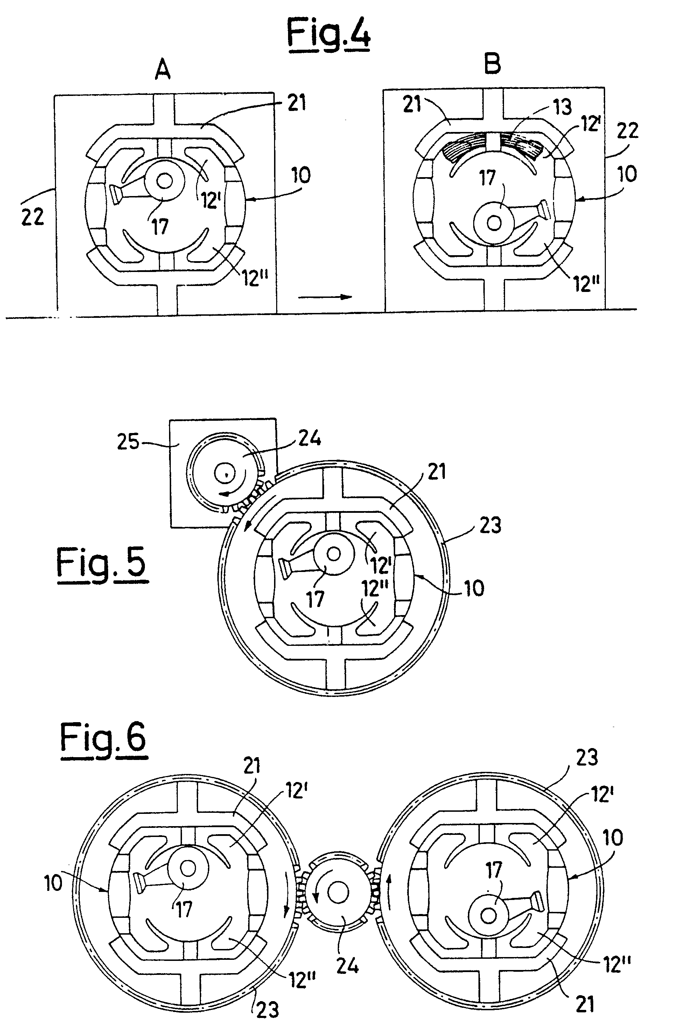

By this means, the needle 17 makes the winding 13 without requiring the aid of the currently necessary shoes. This is because when the needle is external to the stator and has to make the wire undergo the loop about the supports 13, the point 18 is in a position almost in contact with the tooth 16 (Figure 3), and its end 19 is advantageously beyond the upper end of said tooth so that the wire which projects from the point 18 does not require any accompaniment in order to become lodged in the recess formed between the walls of the section 14 and the tooth 16.

This advantage can only be obtained by providing the eccentricity a between the needle axis x and the stator centre y, because if the axes x and y coincided, the point 18 would not be able to project beyond the tooth 16 as it would be larger than the inner diameter of the stator, and this is the reason why shoes are currently used for accompanying the wire delivered by the point 18 beyond the tooth 16 into the inner slot. Dispensing with the use of the shoes gives an obvious advantage to the constructor, who is thus able to eliminate one component of complicated construction, and of which the purpose is limited to the winding formation stage. It also enables the tensioning devices and the tensioning device passage slots provided between the insulating support 14 and the structure 10 to be also eliminated, thus also reducing the overall length of the stator. This also enables a shorter needle stroke to be determined, with consequent higher speed of formation of the winding.

Again, by eliminating the shoes, the wire delivered by the needle makes a smaller loop as it is practically in contact with the support 15 during the rotation of the point 18, and thus the winding is certainly improved in terms of its compactness.

When the winding 13 has been terminated, the second winding on the opposite slot can be formed by various methods. A first method can consist of providing a second working station downstream of the first, in which a second needle is mounted eccentric to the stator as in the first station, but with respect to the other slot on which the new winding 13 is to be formed.

Figure 4 diagrammatically illustrates how this first method can be attained, the stator 10 being retained in position by jaws 21 of a frame 22 in the station A in which a needle 17 is eccentric to the upper slot 12'. When the winding 13 has been formed on it, the frame 22 is moved into the station B in which the needle 17 is eccentric to the lower slot 12", on which the second winding can be formed.

Another method can consist of providing a device which causes the stator to rotate through 180° about its centre y so that, while keeping the position of the needle 17 unchanged, the second slot now becomes located in the position previously occupied by the first with respect to the needle.

Figure 5 diagrammatically illustrates a possible embodiment of this second method in which the support frame for the stator 10 is in the form of a ring gear 23 which engages with a gear wheel 24 rotated by a motor 25 so as to cause the stator to rotate through 180° after the formation of the winding on the slot 12' and position the slot 12" to correspond with said needle 17 for the subsequent formation.

A third method is to provide two side-by-side stations operating on two stators, these latter being interconnected by a device which causes them to rotate simultaneously through 180°, so that they each become rotated through 180° about their own needle to enable the winding to now be made on the empty slots. This third method would mean that there would be no change in the present operating times of machines comprising needles with two opposing points for forming windings simultaneously on both the slots, in that the complete formation takes place on two stators simultaneously. This third method is diagrammatically illustrated in Figure 6 in which it can be seen that the supports 23 for the two side-by-side stators 10 are toothed as in the method of Figure 5, and engage with a gear wheel 24 of the type shown in Figure 5 but interposed between the two supports 23.

The aforesaid represent only three of the possible methods for forming the windings, these being given by way of example only, as are the practical embodiments shown diagrammatically, but these are not limitative of the possible methods or of the possible embodiments of the winding formation machine according to the claims of invention.

## Claims

1. A stator winding machine which comprises a needle (17) having a longitudinal axis (x) and a point (18) projecting transverse to said longitudinal axis, means for driving said needle (17) and means for delivering a wire (13) through said point (18) of said needle, said means for driving said needle including means for moving said needle (17) in reciprocating linear motion along said longitudinal axis (x) and in reciprocating rotary motion about said longitudinal axis (x) characterized in that the machine further comprises means (21,22) for positioning a hollow stator (10) having a central axis (y) and at least one pole piece (12) relative to said needle (17) so that said longitudinal axis (x) of the needle is eccentric relative to said central axis (y) of the stator (10), said longitudinal axis (x) of said needle (17) is maintained at a predetermined distance (a) from said central axis (y) of said stator and said point (18) projects outwardly alongside said pole piece (12) at an end of said stator during rotation of said needle (17) about said longitudinal axis (x).

2. A stator winding machine according to claim 1 characterized in that said longitudinal axis (x) of the needle (17) is disposed between said central axis (y) of the stator (10) and said pole piece (12).

3. A stator winding machine according to claim 1, wherein said means (21,22) for positioning is constructed and arranged to position the longitudinal axis (x) of the needle (17) along a line which is coincident with an axis (z) of symmetry of the pole piece (12) of said stator (10).

4. A stator winding machine according to claim 1, wherein said positioning means includes means for positioning said needle (17) relative to said stator (10) so that the point (18) of the needle extends at least to an end of an outwardly projecting tooth (16) on the stator as said needle (17) rotates about said longitidinal axis (x) of said needle.

5. A stator winding machine comprising two working stations (A, B) each with a respective stator winding machine according to claim 1 for use where said stator (10) has a second pole piece (12") substantially identical to said at least one pole piece (12') and arcuately spaced from said at least one pole piece (12'), the needle (17) of each said respective stator winding machine being arranged at its own winding station (A, B) and means for transferring said stator (10) from one (A) of said winding stations to the other (B) of said winding stations, the needle (17) of each said respective stator winding machine having the same relationship to a respective one of said pole pieces (12', 12") when said stator (10) is at the winding station (A, B) associated with that needle.

6. A stator winding machine according to claim 1 for use where said stator (10) has a second pole piece (12") substantially identical to said at least one pole piece (12') and arcuately spaced 180 degrees from said at least one pole piece (12'), said machine further comprising means (23, 24) for turning the stator 180 degrees relative to said central longitudinal axis (y).

7. A method for forming a winding in a hollow stator (10) without the employment of temporarily positioned winding forms; the stator (10) having a central axis (y) and at least one pole piece (12) projecting inwardly towards said central axis (y); the method being carried out using a needle (17) which is driven with reciprocated rectilinear motion relative to said stator (10) through successive strockes; said needle (17) having a longitudinal axis (x) and providing a point (18) projecting transverse to said longitudinal axis (x); characterized by said method comprising the steps of;

positioning the needle (17) and the stator (10) such that the longitudinal axis (x) thereof is eccentric relative to the central axis (y) of the stator (10);
- maintaining the longitudinal axis (x) of said needle (17) at a predetermined distance (a) from said central axis (y);
- reciprocatingly rotating said needle (17) while said point (18) of said needle is adjacent an end of said stator (10), and
- delivering wire (13) from said point (18) of said needle to thereby wind said wire (13) onto said pole piece (12) of said stator and form a winding on said stator; said predetermined distance (a) being selected so that said point (18) of said needle (17) projects outwardly alongside said pole piece (12) as said needle is rotated.

8. A method according to claim 7 wherein said longitudinal axis (x) of the needle 17 is located between said pole piece (12) and said central axis (y) of the stator and parallel to the latter.

9. A method according to claim 8, wherein said positioning step includes the step of placing said longitudinal axis (x) of the needle (17) at said predetermined distance (a) from said central axis (y) of the stator (10) along a line which is coincident with an axis (z) about which the two opposing dovetails (11) of the pole piece (12) are symmetrical.

10. A method according to claim 7, wherein said stator has a wire retaining tooth (16) projecting outwardly, away from said central axis (y) adjacent said pole piece (12) at said end of said stator (10), and said rotation of the needle is performed so that during said rotating step the point (18) of the needle (17) extends in the direction away from said central axis (y) at least to the end of said tooth (16) remote from said central axis (y).

11. A method according to any of the preceeding claims 7-10 characterized in that the needle (17) undergoes reciprocating reclilinear motion combined with reciprocating rotary motion about its axis (x); the stator and needle being coupled together in such a manner that the axis (x) of the needle (17) is eccentric to the centre (y) of the stator (10) and lies at a distance (a) therefrom, along the axis of symmetry (z) of the slots (12) to which it is adjacent, such that the height (b) of the point (18) of the needle (17), calculated as the distance between its end (19) and the axis (x), is equal to or greater than the distance (c) between the axis (x) and the end of the tooth (16) which frontally retains the winding (13) in the slots (12).

12. A method according to claim 11, characterized in that the reciprocating motion of the needle (17) has a stroke which just exceeds the distance between the teeth (16) at the front ends of those slots to which the needle (17) is adjacent.

13. A method according to claim 7, wherein said positioning, maintaining, reciprocatingly rotating and delivering steps are performed with a first needle (17) at a first winding station (A), said method further comprising the steps of transferring the stator (10) from said first winding station (A) to a second winding station (B), and repeating said positioning, maintaining, reciprocatingly rotating and delivering steps using a second needle (17) at said second winding station (B) to thereby form another winding (13) on said stator (10).

14. A method according to claim 7, wherein said stator (10) has two opposed pole pieces (12', 12") said maintaining, reciprocatingly rotating and delivering steps are performed with the needle (17) on a first one (12') of said opposed pole pieces; said method further comprising the step of turning the stator 180 degrees about the central axis (y) thereof, after said winding (13) is formed on one of said opposed pole pieces (12') and then, after the stator is turned 180 degree, and repeating said rotating, reciprocatingly and delivering steps using said needle (17) to thereby form another winding (13) on a second one (12") of said pole pieces opposite to the first one (12') of said pole pieces.

15. A method according to claim 14 wherein said maintaining, reciprocatingly rotating, delivering, turning and repeating steps are performed on a plurality of stators (10) simultaneously, using a separate needle (17) for each of said stators.

**Revendications**

1. Machine pour bobinages statoriques qui comprend une aiguille (17) ayant un axe longitudinal (x) et une pointe (18) se projetant transversalement audit axe longitudinal, un moyen pour entraîner cette aiguille (17) et un moyen pour fournir un fil (13) à la pointe (18) de cette aiguille, le moyen pour entraîner l'aiguille comprenant un moyen de déplacement de cette aiguille (17) d'un mouvement linéaire alternatif le long dudit axe longitudinal (x) et d'un mouvement de rotation alternatif autour dudit axe longitudinal (x), caractérisée en ce que la machine comprend en outre des moyens (21, 22,) pour positionner un stator creux (10) ayant un axe central (y) et au moins une pièce polaire (12) par rapport à ladite aiguille (17) de façon que l'axe longitudinal (x) de l'aiguille soit excentré par rapport à l'axe central (y) du stator (10), cet axe longitudinal (x) de l'aiguille (17) étant tenu à une distance prédéterminée (a) de l'axe central (y) du stator et la pointe (18) se projetant vers l'extérieur le long de la pièce polaire (12) à une extrémité du stator pendant la rotation de cette aiguille (17) autour de l'axe longitudinal (x).

2. Machine pour bobinages de stator conforme à la revendication 1 caractérisée en ce que l'axe longitudinal (x) de l'aiguille (17) est disposé entre l' axe central (y) du stator (10) et la pièce polaire (12).

3. Machine pour bobinages de stator conformément à la revendication 1 dans laquelle les moyens (21,22) pour le positionnement sont construits et disposés pour positionner l'axe longitudinal (x) de l'aiguille (17) le long d'une ligne qui est en coïncidence avec un axe (z) de symétrie de la pièce polaire (12) du stator (10).

4. Machine pour bobinages statoriques conforme à la revendication 1 dans laquelle le moyen de positionnement comprend un moyen pour positionner l'aiguille (17) par rapport au stator (10) de façon que la pointe (18) de l'aiguille s'étende au moins jusqu'à une extrémité d'une dent (16) se projetant vers l'extérieur sur le stator lorsque cette aiguille (17) tourne autour dudit axe longitudinal (x) de l'aiguille.

5. Machine pour bobinages de stator comprenant deux postes de travail (A, B) chacun avec une machine correspondante pour bobinage de stator conformément à la revendication 1 pour servir lorsque le stator (10) a une seconde pièce polaire (12") substantiellement identique à ladite pièce polaire (12') et espacée de manière incurvée de cette pièce polaire (12'), l'aiguille (17) de chaque machine respective pour bobinage statorique étant disposée à son propre poste d'enroulement (A, B) et un moyen pour transférer le stator (10) d'un poste (A) des postes pour bobinage à l'autre poste (B) des postes pour bobinage, l'aiguille (17) de chaque machine respective pour bobinage statorique ayant la même relation vis-à-vis d'une pièce correspondante des pièces polaires (12', 12") lorsque le stator (10) est au poste de bobinage (A, B) associé à cette aiguille.

6. Machine pour bobinages statoriques selon la revendication 1 utilisable lorsque le stator (10) a une seconde pièce polaire (12") substantiellement identique à la pièce polaire (12') et espacé d'une manière incurvée de 180 degrés de cette pièce polaire (12'), cette machine comprenant en plus des moyens (23, 24) pour faire tourner le stator de 180 degrés par rapport à l'axe central longitudinal (y).

7. Procédé pour la formation d'un bobinage dans un stator (10) creux sans l'emploi de forme de bobinage positionnée temporairement, le stator (10) ayant un axe central (y) et au moins une pièce polaire (12) se projetant vers l'intérieur en direction de l'axe central (y), le procédé étant mis en oeuvre à l'aide d'une aiguille (17) qui est entraînée pour exécuter un mouvement rectiligne alternatif par rapport au stator (10) au moyen de courses successives, cette aiguille (17) ayant un axe longitudinal (x) et présentant une pointe (18) se projetant en sens transversal à l'axe longitudinal (x), caractérisé en ce que ce procédé comprend les opérations de :
- positionner l'aiguille (17) et le stator (10) de façon que l'axe longitudinal (x) de celle-là soit excentré par rapport à l'axe central (y) du stator (10) ;
- tenir l'axe longitudinal (x) de l'aiguille (17) à une distance prédéterminée (a) de l'axe central (y) ;
- faire tourner de manière alternative l'aiguille (17) lorsque la pointe (18) de cette aiguille est au voisinage d'une extrémité du stator (10) et,
- fournir du fil (13) à partir de la pointe (18) de l'aiguille pour bobiner par ce moyen ce fil (13) sur la pièce polaire (12) du stator et former un enroulement sur ce stator, la distance prédéterminée (a) étant choisie pour que la pointe (18) de l'aiguille (17) se projette vers l'extérieur le long de la pièce polaire (12) pendant que cette aiguille est entraînée en rotation.

8. Procédé selon la revendication 7 selon lequel l'axe longitudinal (x) de l'aiguille (17) est situé entre la pièce polaire (12) et l'axe central (y) du stator, et il est parallèle à ce dernier.

9. Procédé selon la revendication 8 selon lequel l'opération de positionnement comprend l'opération de mettre l'axe longitudinal (x) de l'aiguille (17) à la distance prédéterminée (a) de l'axe central (y) du stator (10) le long d'une ligne qui est en coïncidence avec un axe (z) par rapport auquel les deux queues d'aronde opposées (11) de la pièce polaire (12) sont symétriques.

10. Procédé selon la revendication 7 selon lequel le stator a une dent (16) de retenue du fil se projetant vers l'extérieur, s'éloignant de l'axe central (y) proche de la pièce polaire (12) à l'extrémité du stator (10), et la rotation de l'aiguille est exécutée de telle sorte que pendant l'opération de rotation la pointe (18) de l'aiguille (17) s'étend dans un sens d'éloignement de l'axe central (y) au moins jusqu'à l'extrémité de la dent (16) éloignée de cet axe central (y).

11. Procédé selon l'une des revendications 7 à 10 caractérisé en ce que l'aiguille (17) exécute un mouvement rectiligne alternatif combiné à un mouvement rotatif alternatif autour de son axe (x), le stator et l'aiguille étant couplés ensemble de manière telle que l'axe (x) de l'aiguille (17) est excentré par rapport à l'axe (y) du stator (10) et se trouve à une distance (a) de cet axe, le long de l'axe de symétrie (z) des encoches (12) desquelles il est voisin de sorte que la hauteur (b) de la pointe (18) de l'aiguille (17), calculée comme la distance entre son extrémité (19) et l'axe (x), est égale ou supérieure à la distance (c) entre l'axe (x) et l'extrémité de la dent (16) qui retient frontalement l'enroulement (13) dans les encoches (12).

12. Procédé selon la revendication 11 caractérisé en ce que le mouvement alternatif des aiguilles (17) a une course qui excède juste la distance entre les dents (16) aux extrémités frontales de ces encoches desquelles l'aiguille (17) est voisine.

13. Procédé selon la revendication 7, selon lequel les opérations de positionnement, de tenue, de rotation alternative et de fourniture sont exécutées à l'aide d'une premièce aiguille (17) à un premier poste de bobinage (A), ce procédé comprenant en outre des opérations de transfert du stator (10) du premier poste (A) de bobinage à un second poste (B) de bobinage et la répétition des opérations de positionnement, de tenue, de rotation alternative et de fourniture à l'aide d'une seconde aiguille (17) au second poste (B) de bobinage pour la formation à ce dernier d'un autre enroulement (13) sur le stator (10).

14. Procédé selon la revendication 7 selon lequel le stator (10) a deux pièces polaires opposées (12', 12"), les opérations de tenue, de rotation alternative et de fourniture sont exécutées à l'aide de l'aiguille (17) sur une première pièce (12') des pièces polaires opposées, ce procédé comprenant en outre l'opération de faire tourner le stator de 180 degrés autour de son axe central (y) lorsque l'enroulement (13) a été formé sur l'une des pièces polaires opposées (12') et ensuite, quand le stator a tourné à 180 degrés, répéter ces opérations de rotation, de mouvements alternatifs et de fourniture à l'aide de l'aiguille (17) pour former un autre enroulement (13) sur une seconde pièce (12") des pièces polaires opposée à la première pièce (12') des pièces polaires.

15. Procédé selon la revendication 14 selon lequel les opérations de tenue, de rotation alternative, de fourniture, de demie rotation et de répétition sont exécutées simultanément sur une pluralité de stators (10) l'aide d'une aiguille distincte (17) pour chacun des stators.

**Ansprüche**

1. Statorwickelmaschine, welche aufweist:
   - eine Nadel (17) mit einer Längsachse (x) und einer quer zu dieser Längsachse vorstehenden Spitze (18);
   - Mittel zum Antrieb der Nadel (17); und
   - Mittel zur Zuführung eines Drahtes (13) durch diese Spitze (18);

   wobei die Mittel zum Antrieb der Nadel Mittel zum linearen Hin- und Herbewegen der Nadel (17) längs der Längsachse (x) und zum schwenkenden Hin- und Herbewegen um diese Längsachse (x) umfassen, dadurch gekennzeichnet, dass die Maschine weiter Mittel (22, 23) aufweist, um einen hohlen Stator (10) mit einer zentralen Achse (y) und wenigstens einem Polschuh (12) bezüglich der Nadel (17) so zu positionieren, dass die Längsachse (x) der Nadel bezüglich der zentralen Achse (y) des Stators (10) exzentrisch verläuft, wobei die Längsachse (x) der Nadel (17) in einem vorbestimmten Abstand (a) von der zentralen Achse (y) des Stators (10) gehalten wird, und wobei die Spitze (18) während des Schwenkens der Nadel (17) um die Längsachse (x) an den Enden des Stators in Längsrichtung über den Polschuh (12) hinaus vorsteht.

2. Statorwickelmaschine nach Anspruch 1, dadurch gekennzeichnet, dass die Längsachse (x) der Nadel (17) zwischen der zentralen Achse (y) des Stators (10) und dem Polschuh (12) liegt.

3. Statorwickelmaschine nach Anspruch 1, dadurch gekennzeichnet, dass die Positionierungsmittel (21, 22) so konstruiert und angeordnet sind, dass sie die Längsachse (x) der Nadel (17) längs einer Geraden positionieren, welche mit einer Symmetrieachse (z) des Polschuhs (12) des Stators (10) zusammenfällt.

4. Statorwickelmaschine nach Anspruch 1, dadurch gekennzeichnet, dass die Positionierungsmittel Mittel aufweisen, um die Nadel (17) bezüglich dem Stator (10) derart zu positionieren, das sich die Spitze (18) der Nadel mindestens bis zum Ende eines nach aussen abstehenden Zahns (16) am Stator erstreckt, wenn die Nadel (17) um ihre Längsachse (x) schwenkt.

5. Statorwickelmaschine, welche aufweist:
   - zwei Arbeitsstationen (A, B), von denen jede eine Statorwickelmaschine nach Anspruch 1 umfasst, zur Verwendung mit Statoren (10), welche einen mit dem ersten Polschuh (12') im wesentlichen identischen und in genauem Abstand von diesem angeordneten zweiten Polschuh (12") aufweisen, wobei die Nadel (17) jeder dieser Statorwickelmaschinen in ihrer eigenen Wickelstation (A, B) angeordnet ist; und
   - Mittel zum Überführen des Stators (10) von der einen (A) zur anderen Wickelstation (B), wobei die Nadel (17) jeder Statorwickelmaschine bezüglich des betreffenden Polschuhs (12, 12') dieselbe Relation aufweist, wenn der Stator (10) in der Wickelstation (A, B) dieser Nadel zugeordnet ist.

6. Statorwickelmaschine nach Anspruch 1 zur Verwendung mit Statoren (10), welche einen mit dem ersten Polschuh (12') im wesentlichen identischen und im Abstand von genau 180° von diesem angeordneten zweiten Polschuh (12") aufweisen, wobei die Maschine weiter Mittel (23, 24) zum Drehen des Stators um 180° bezüglich der zentralen Längsachse (y) aufweist.

7. Verfahren zur Bildung einer Wicklung in einem hohlen Stator (10) ohne Verwendung von zeitweilig in Stellung gebrachten Wickelformen, wobei der Stator (10) eine zentrale Achse (y) und mindestens einen sich nach innen gegen die zentrale Achse (y) hin erstreckenden Polschuh (12) aufweist; wobei das Verfahren mittels einer Nadel (17), welche in einer geradlinigen Hin- und Herbewegung gegenüber dem Stator (10) in aufeinanderfolgenden Hüben angetrieben wird, ausgeführt wird; und wobei die Nadel (17) eine Längsachse (x) aufweist und mit einer Spitze (18) versehen ist, welche sich quer zur Längsachse (x) erstreckt, dadurch gekennzeichnet, dass das Verfahren folgende Schritte aufweist:
   - Positionieren der Nadel (17) und des Stators (10) derart, dass die Längsachse (x) bezüglich der zentralen Achse (y) des Stators (10) exzentrisch verläuft;
   - Halten der Längsachse (x) der Nadel (17) in einem vorbestimmten Abstand (a) von der zentralen Achse (y);
   - Schwenkendes Hin- und Herbewegen der Nadel (17), während die Spitze (18) der Nadel sich in der Nähe eines Endes des Stators (10) befindet;
   - Zuführen von Draht (13) von der Spitze (18) der Nadel, um den Draht (13) auf den Polschuh (12) des Stators (10) zu wickeln und auf dem Stator eine Wicklung zu bilden;
   wobei der vorbestimmte Abstand (a) so gewählt wird, dass die Spitze (18) der Nadel (17) während ihres Schwenkens über den Polschuh (12) hinaus in Längsrichtung vorsteht.

8. Verfahren nach Anspruch 7, dadurch gekennzeichnet, dass die Längsachse (x) der Nadel (17) zwischen dem Polstück (12) und der zentralen Achse (y) des Stators angeordnet ist und parallel zu letzterem verläuft.

9. Verfahren nach Anspruch 8, worin der Schritt des Positionierens einen Schritt umfasst, bei welchem die Längsachse (x) der Nadel (17) in den vorbestinmten Abstand (a) von der zentralen Achse (y) gebracht wird, und zwar längs einer Geraden, die mit einer Achse (z), bezüglich welcher die beiden gegeneinander gerichteten Schwalbenschwänze (11) des Polschuhs (12) symmetrisch sind, zusammenfällt.

10. Verfahren nach Anspruch 7, worin der Stator einen Drahtrückhalte-Zahn (16) aufweist, welcher sich in der Nähe des Polschuhs (12) am Ende des Stators (10) von der zentralen Achse (y) weg nach aussen erstreckt, und wobei das Schwenken der Nadel in der Weise erfolgt, dass die Spitze (18) der Nadel (17) während des Schrittes des Schwenkens sich in Richtung von der zentralen Achse (y) weg wenigstens bis zu dem von der zentralen Achse (y) abgewandten Ende des Zahns (16) erstreckt.

11. Verfahren nach einem der vorangehenden Ansprüche 7 bis 10, dadurch gekennzeichnet, dass die Nadel (17) eine geradlinige Hin- und Herbewegung in Kombination mit einer schwenkenden Hin- und Herbewegung um ihre Achse (x) ausführt, wobei der Stator und die Nadel in solcher Weise miteinander gekuppelt sind, dass die Achse (x) der Nadel (17) bezüglich des Zentrums (y) des Stators (10) exzentrisch verläuft und in einem Abstand (a) von diesem längs der Symmetrieachse (z) der Nuten (12), denen sie benachbart ist, verläuft, derart dass die Höhe (b) der Spitze (18) der Nadel (17) - berechnet als der Abstand zwischen ihrem Ende (19) und der Achse (x) - gleich oder grösser ist als der Abstand (c) zwischen der Achse (x) und dem Ende des Zahns (16), welcher stirnseitig die Windung (13) in den Nuten (12) zurückhält.

12. Verfahren nach Anspruch 11, dadurch gekennzeichnet, dass die Hin- und Herbewegung der Nadel (17) einen Hub aufweist, welche den Abstand zwischen dem Zahn (16) an den Stirnseiten jener Nuten, welchen die Nadel (17) benachbart ist, gerade überschreitet.

13. Verfahren nach Anspruch 7, wobei die Schritte des Positionierens, des Abstandhaltens, des schwenkenden Hin- und Herbewegens und des Zuführens mit einer ersten Nadel (17) an einer ersten Wickelstation (A) ausgeführt werden, und wobei das Verfahren weiter folgende Schritte umfasst:
   - Überführen des Stators (10) von der ersten Wickelstation (A) zu einer zweiten Wickelstation (B); und
   - Wiederholen der Schritte des Positionierens, des Abstandhaltens, der schwenkenden Hin- und Herbewegung und des Zuführens mittels einer zweiten Nadel (17) an der zweiten Wickelstation (B), um dabei eine weitere Windung (13) auf dem Stator (10) zu bilden.

14. Verfahren nach Anspruch 7, wobei der Stator (10) zwei einander gegenüberliegende Polschuhe (12', 12") aufweist, und wobei Schritte des Abstandhaltens, des schwenkenden Hin- und Herbewegens und des Zuführens mit der Nadel (17) am ersten (12') der einander gegenüberliegenden Polschuhe aufgeführt wird, und wobei das Verfahren weiter den folgenden Schritt umfasst:

- Drehen des Stators (10) um seine zentrale Achse (y) um 180°, nachdem die Windung (13) auf einem der einander gegenüberliegenden Polschuhe (12') gebildet ist; und Wiederholen der Schritte des schwenkenden Hin- und Herbewegens und des Zuführens nach dem Drehen des Stators um 180° unter Verwendung der Nadel (17), um dabei eine weitere Windung (13) auf einem zweiten (12"), dem ersten Polschuh (12') gegenüberliegenden Polschuh zu bilden.

15. Verfahren nach Anspruch 14, worin die Schritte des Abstandhaltens, des schwenkenden Hin- und Herbewegens, des Zuführens, des Drehens und des Wiederholens gleichzeitig an einer Mehrzahl von Statoren (10) unter Verwendung einer besonderen Nadel (17) für jeden Stator durchgeführt werden.

EP 0 200 236 B1

Fig.1

Fig.2

Fig.3

10

## Fig.4

A    B

21

13  12'
21        22

10

12'      10

22        17

17

12''

12''

## Fig.5

25    24

21

23

12'
12''    10

17

## Fig.6

21    23

12'    12'

10

10    17    24    12''

17

12''    21

23    24